Europäisches Patentamt

(19) European Patent Office

Office européen des brevets

(11) **EP 1 080 559 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(21) Anmeldenummer: **99920709.5**

(22) Anmeldetag: **19.04.1999**

(51) Int Cl.7: **H04L 9/32**

(86) Internationale Anmeldenummer:
**PCT/EP1999/002630**

(87) Internationale Veröffentlichungsnummer:
**WO 1999/059287 (18.11.1999 Gazette 1999/46)**

(54) **VERFAHREN ZUR SICHEREN VERTEILUNG VON SOFTWARE**

METHOD FOR SECURE DISTRIBUTION OF DATA

PROCEDE DE DISTRIBUTION SURE DE LOGICIEL

(84) Benannte Vertragsstaaten:
**AT BE CH CY DE DK ES FI FR GB GR IE IT LI LU MC NL PT SE**

(30) Priorität: **08.05.1998 DE 19820605**

(43) Veröffentlichungstag der Anmeldung:
**07.03.2001 Patentblatt 2001/10**

(73) Patentinhaber: **Giesecke & Devrient GmbH
81677 München (DE)**

(72) Erfinder: **SEYSEN, Martin
D-80809 München (DE)**

(56) Entgegenhaltungen:
**EP-A- 0 566 498          EP-A- 0 686 906**

• **MENEZES: "HANDBOOK OF APPLIED CYPTOGRAPHY" 1997 , CRC PRESS , NEW YORK XP002112400 Seite 438, Absatz 4 - Seite 442, Absatz 1**

**Beschreibung**

Die Erfindung betrifft ein Verfahren zur sicheren Verteilung von Daten und/oder Programmen nach dem Oberbegriff des Anspruchs 1.

Verfahren zur Verteilung von Software SW von einer ausgebenden Stelle an eine große Anzahl von gleichartigen Terminals bzw. an Chipkarten finden insbesondere durch die Möglichkeiten der Datenfernübertragung immer mehr Verwendung. Die ausgebende Stelle erzeugt eine elektronische Unterschrift der Software SW mit Hilfe eines Public-Key Verfahrens, um die Authentizität der Software SW sicherzustellen.

Dafür berechnet die herausgebende Stelle nach einem allgemein bekannten Verfahren ein Zertifikat M der zu unterschreibenden Software SW, welches neben anderen Daten vor allem einen von der Software abhängigen Hash-Wert H(SW) enthält. Hierbei ist H(SW) ein öffentlich bekanntes Hash-Verfahren. Die herausgebende Stelle verschlüsselt das Zertifikat M mit ihrem privaten Schlüssel D. Das Ergebnis dieser Verschlüsselung ist die elektronische Unterschrift S. Die herausgebende Stelle sendet die Software SW zusammen mit der Unterschrift S an das Terminal oder die Chipkarte. Dort wird aus der Unterschrift S mit Hilfe des öffentlichen Schlüssels $E=D^{-1}$ der herausgebenden Stelle der Wert M des erzeugten Zertifikates berechnet. Ferner berechnet das Terminal bzw. die Chipkarte, d.h. die empfangende Stelle den Hash-Wert H(SW) der Software SW und prüft, ob H(SW) in dem Zertifikat M korrekt eingetragen ist. Wenn dies der Fall ist, akzeptiert die empfangende Stelle die Software SW, andernfalls weist sie die Software SW zurück.

Das bekannteste Public-Key Verfahren zur Erzeugung von elektronischen Unterschriften ist das RSA-Verfahren. Eine Variante des RSA-Verfahrens ist das Verfahren von Rabin oder eine Variante des Rabin-Verfahrens nach Williams.

Die ausgebende Stelle wählt zufällig zwei Primzahlen P=3 mod 8 und Q=7 mod 8. Diese stellen den privaten Schlüssel von der ausgebenden Stelle dar. Der öffentliche Schlüssel ist der Wert N=P*Q. Zum Unterschreiben einer Nachricht M berechnet die ausgebende Stelle die Unterschrift

$$S=M^{1/2} \bmod (P*Q).$$

Die empfangende Stelle kann die Unterschrift verifizieren, indem sie

$$M = S^2 \bmod N$$

berechnet.

Die Sicherheit des Rabin-Verfahrens beruht darauf, daß das Ziehen der Quadratwurzel einer Zahl modulo einer Primzahl (falls eine solche existiert) einfach ist, während das Ziehen der Quadratwurzel einer zufällig gewählten Zahl modulo einer zusammengesetzten Zahl mindestens ebenso schwierig ist die Faktorisierung jener zusammengesetzten Zahl.

Nicht jede Zahl ist quadratischer Rest modulo einer Primzahl P oder Q; außerdem haben quadratische Reste mod P und Q in der Regel vier Quadratwurzeln. Aufgrund der speziellen Wahl von P und Q ist für jede beliebige Zahl M genau eine der vier Zahlen M, N-M, N/2 und N-M/2 quadratischer Rest mod P und mod Q (Bei ungeradem M wird N/2 durch (M+N)/2 mod P*Q ersetzt). Diese Aussage folgt aus den Ergänzungssätzen zum quadratischen Reziprozitätsgesetz.

Fordert man für die Nachricht M die zusätzliche Bedingung M=4 mod 8, so gilt wegen der Beziehung N= P*Q = 3*7 = 5 (mod 8) folgendes:

$$M=0, N-M=1, M/2=2, M-N/ 2=3 \ (\bmod\ 4)$$

d.h. die vier Zahlen M, N-M, M/2 und N-M/2 unterscheiden sich in den letzten beiden Binärstellen.

Zum Unterschreiben einer Nachricht M prüft die ausgebende Stelle zunächst, welcher der vier Werte M, N-M, N/2 oder N-N/2 quadratischer Rest mod P und mod Q ist. Dies kann effektiv durch Berechnen der Jacobi-Symbole (N/P) und (M/Q) erfolgen:

$$M' = M \text{ falls } (M/P) = 1, (M/Q) = 1;$$

$$M' = -M \text{ falls } (M/P) = -1, (M/Q) = -1;$$

$$M' = M/2 \text{ falls } (M/P) = -1, (M/Q) = 1;$$

$$M' = -M/2 \text{ falls } (M/P) = 1, (M/Q) = -1;$$

Sei M' derjenige Wert, der beide Bedingungen erfüllt. Die Unterschrift zu der Nachricht M ist dann:

$$S = (M')^{(P*Q-P-Q+5)/8} \bmod N$$

Es gilt also:

$$S^2 = M' * (M')^{[(P-1)/2] \, * \, [(Q-1)/2]} \bmod N$$

Da M' quadratischer Rest mod P ist, folgt nach dem kleinen Fermat'schen Satz $(M')^{[(P-1)/2]} =1$ mod P. Analog gilt $(M')^{[(Q-1)/2]} = 1$ mod Q. Nach dem chinesischen Restsatz folgt weiter $(M')^{[(P-1)/2] \, * \, [(Q-1)/2]} = 1$ mod P*Q. Es gilt also

$$S^2 = M' \bmod N = P*Q.$$

Zum Verifizieren der Unterschrift S berechnet das Terminal B zunächst den Wert

$$M' = S^2 \bmod N$$

Da sich bei gegebenem M=4 mod 8 die vier möglichen Werte für M' in den letzten beiden Binärstellen unterscheiden, läßt sich M leicht aus M' berechnen:

$$M = M' \qquad \text{falls } M' = 0 \bmod 4;$$

$$M = N-M' \qquad \text{falls } M' = 1 \bmod 4;$$

$$M = 2M' \qquad \text{falls } M' = 2 \bmod 4;$$

$$M = 2(N-M') \qquad \text{falls } M' = 3 \bmod 4;$$

Zum Verifizieren einer Unterschrift auf der Chipkarte oder dem Terminal B ist eine modulare Multiplikation erforderlich; d.h. die empfangende Stelle berechnet:

$$M' = S * S \bmod N$$

Hierzu ist eine Multiplikation und eine Division erforderlich. Dabei ist die Division um einiges aufwendiger als die Multiplikation. Der Nachteil der bekannten Verfahrensweise zum Verifizieren einer Unterschrift besteht also darin, daß bei der die Software empfangenden Stelle, die üblicherweise weniger Rechenkapazität zur Verfügung hat als die ausgebende Stelle, eine vergleichsweise aufwendige Rechenoperation durchführen muß.

Aus Menezes: Handbook of applied Cryptography", 1997, CRC Press, New York, XP002112400 ist es bekannt, zur Verifikation einer elektronischen Unterschrift eine Montgomery Multiplikation zu verwenden.

Aus der europäischen Offerdegungsschrift EP-A-0 566 498 ist ein Verfahren zur sicheren Verteilung von Daten und/oder Programmen bekannt, bei dem die zu übertragenden Daten mit einer elektronischen Unterschrift versehen werden, welche beim Empfänger überprüft wird. Zur Überprüfung dieser Unterschrift wird beim Empfänger eine modulare Multiplikation nach Montgomery durchgeführt,

Der Nachteil der bekannten Verfahren besteht insbesondere darin, daß bei der Verteilung von Software an Stellen, welche eine geringe Rechenleistung aufweisen, die Verifizierung der Unterschrift an Grenzen der Rechnerleistung stößt.

Es ist deshalb Aufgabe der Erfindung, ein Verfahren zum sicheren Verteilen von Software anzugeben, bei dem obige Nachteile vermieden werden.

Ausgehend von den Merkmalen des Oberbegriffs des Anspruchs 1 wird diese Aufgabe durch die kennzeichnenden Merkmale des Anspruchs 1 gelöst.

Vorteilhafte Ausgestaltungen der Erfindung sind in den abhängigen Ansprüchen angegeben. Gemäß der Erfindung wird anstelle der üblichen Standardverfahren für Langzahlarithmetik (Trial Division) ein Verfahren nach Montgomery für die Verifizierung der elektronischen Unterschrift eingesetzt. Montgomery beschreibt ein schnelleres Verfahren zur modularen Multiplikation, welches statt des Produktes $Z = X * Y$ modulo N den folgenden Wert berechnet:

$$Z0 = X*Y*L^{-i} \bmod N$$

Hierbei ist L die Basis, bezüglich welcher die Langzahlarithmetik durchgeführt wird. Typischerweise wird $L=2^8$ bei einem 8-Bit Prozessor verwendet, $L=2^{16}$ bei einem 16-Bit Prozessor, usw. gewählt. Der Wert i muß mindestens so groß sein, daß die Bedingung

$$L^i > N$$

erfüllt ist.

Der Vorteil des Montgomery-Verfahrens besteht darin, daß der Schritt der "Trial-Division" bei der modularen Multiplikation entfällt. Dafür wird zusätzlich mit dem unerwünschten Faktor $L^{-i} \bmod N$ multipliziert. Die Kompensation dieses unerwünschten Effektes bei der modularen Exponentiation nach dem RSA-Verfahren kann wie folgt geschehen:

Die Berechnung einer RSA-Exponentiation $A^E \bmod N$ wird üblicherweise durch wiederholte Anwendung der Potenzgesetze $A^{2x} = A^x * A^x \ (\bmod N)$ und $A^{2x+1} = (A^x*A^x) * A \ (\bmod N)$ durchgeführt. Im ersten Schritt wird $X=(E/2)$ gesetzt, und in den Folgeschritten wird X solange durch (X/2) ersetzt bis X=1 gilt; hierbei ist (X) die größte ganze Zahl <=X. Faktisch wird die modulare Exponentiation damit auf eine Folge von Quadrierungen und Multiplikationen mit der Basis A (mod N) zurückgeführt.

Bei der modularen Exponentiation mit dem Montgomery-Verfahren wird folgendes berechnet:

$$A0 = (A0 * (L^{2i} \bmod N)) * L^i \bmod N$$

Diese erfordert eine Montgomery-Multiplikation mit dem festen Wert $L^{2i} \bmod N$ und es gilt $A0 = A * L^i \bmod N$. Offensichtlich gilt:

$$A^x * A^y * L^i = (Ax * L^i) * (A^y * L^i) * L^i = A^{x+y} * Li \bmod N.$$

Mit Hilfe von $(A^x * L^i)$ und $(A^y * L^i)$ läßt sich also der Wert $A^x * A^y * L^i$ durch eine einzige Montgomery-Multiplikation berechnen. Beginnend mit dem Wert $A0 = A^1 * L^i$ läßt sich durch wiederholtes Quadrieren und Multiplizieren mit A0 leicht der Wert $A^E * L^i$ berechnen. Eine weitere Montgomery-Multiplikation des Zwischenergebnisses $A^E * L^i$ mit 1 liefert das gewünschte Enderbnis $A^E$.

Bei der modularen Exponentiation mit einem zufällig im Bereich 1, ..., N gewählten Exponenten entsteht durch eine erforderliche Kompensation ein relativ geringer zusätzlicher Rechenaufwand. _

Bei einem Software-Download in ein Terminal oder eine Chipkarte muß dort die Unterschriftsprüfung durchgeführt werden. Da das Terminal in der Regel über wenig Rechenleistung verfügt, muß die Unterschriftsprüfung so einfach wie möglich realisiert werden.

Bei der herkömmlichen Kombination der Unterschriftsprüfung nach Rabin mit der Montgomery-Multiplikation wird die Unterschrift S an das Terminal B übertragen.

Das Terminal B berechnet:

$$M0 = (S * S) * L^{-i} \bmod N$$

$$M' = (M0 * (L^{2i} \bmod N)) \, L^{-i} \bmod N$$

Offensichtlich gilt dann $M' = S^2 \bmod N$. Dieses Verfahren erfordert zwei Montgomery-Multiplikationen mod N und es muß außerdem der Wert $(L^{2i} \bmod N)$ in der empfangenden Stelle gespeichert werden.

Gemäß einer vorteilhaften Ausgestaltung der Erfindung, wird deshalb folgende Modifikation vorgenommen, welche gegenüber dem herkömmlichen Verfahren eine Montgomery-Multiplikation und das Speichern des Wertes $(L^{2i} \bmod N)$ nicht benötigt. Anstelle der Unterschrift S wird die modifizierte Unterschrift

$$S' = S * L^{i/2} \bmod N$$

an die empfangende Stelle übertragen. Da L bei handelsüblichen Prozessoren eine gerade Zweierpotenz ist, läßt sich $L^{i/2}$ leicht berechnen. Die empfangende Stelle berechnet nun nach dem Montgomery-Verfahren den Wert

$$(S' * S') * L^{-i} \bmod N = (S * L^{i/2} * S * L^{i/2}) \, L^{-i} \bmod N$$

$$= S^2 \bmod N = M' \bmod N.$$

Somit erfodert die Unterschriftsprüfung nur eine Montgomery-Multiplikation auf dem Terminal.

**Patentansprüche**

**1.** Verfahren zur sicheren Verteilung von Daten und/oder Programmen, wobei die zu übertragenden Daten mit einer elektronischen Unterschrift, vorzugsweise nach einem Public-Key-Verfahren erzeugt, versehen werden, wobei diese elektronische Unterschrift in der die Daten und/oder Programme erhaltenden Stelle überprüft wird und zur Überprüfung eine modulare Multiplikation ausgeführt wird, wozu eine Multiplikation und eine Division erforderlich ist, wobei zur Überprüfung der Unterschrift in der die Daten und/oder Programme erhaltenden Stelle zur Überprüfung der Unterschrift eine modulare Multiplikation nach Montgomery durchführt wird, **dadurch gekennzeichnet, daß** bei der Montgomery-Multiplikation eine zusätzliche Multiplikation mit einem Faktor auf Grundlage der Basis 2 und geradzahligen Exponenten durchgeführt wird und in der die Daten und/oder Programme ausgebenden Stelle die digitale Unterschrift mit einem aus der Montgomery-Multiplikation abgeleiteten Faktor multipliziert wird, so daß sich auf der die Daten und/oder Programme erhaltenden Stelle der zusätzliche Multiplikationsfaktor herauskürzt

**2.** Verfahren nach Anspruch 1, **dadurch gekennzeichnet, daß** die Daten und/oder Programme zu einem Chip-Karten-Terminal oder einer Chipkarte übertragen werden.

**Claims**

**1.** A method for secure distribution of data and/or programs, wherein the data to be transmitted are provided with an electronic signature, preferably generated by a public-key method, wherein said electronic signature is checked in the unit receiving the data and/or programs and said checking involves execution of a modular multiplication, necessitating a multiplication and a division, wherein for the checking of the signature the unit receiving the data and/or programs performs a modular multiplication according to Montgomery, **characterized in that** in said Montgomery multiplication an additional multiplication by a factor on the basis of base 2 and even exponents is performed, and in the unit issuing the data and/or programs the digital signature is multiplied by a factor derived from the Montgomery multiplication so that the additional multiplication factor cancels out at the unit receiving the data and/or programs.

**2.** A method according to claim 1, **characterized in**

**that** the data and/or programs are transferred to a smart card terminal or smart card.

## Revendications

1. Procédé pour la distribution sécurisée de données et/ou programmes, dans lequel les données à transférer sont munies d'une signature électronique, avantageusement obtenue grâce à un procédé à clé public, cette signature électronique étant vérifiée dans l'emplacement qui reçoit les données et/ou les programmes et une multiplication modulaire étant mise en oeuvre pour la vérification pour laquelle une multiplication et une division sont nécessaires, et une multiplication modulaire selon Montgomery étant mise en oeuvre pour la vérification de la signature dans l'emplacement qui reçoit les données et/ou les programmes pour la vérification de la signature, **caractérisé en ce que**, lors de la multiplication Montgomery, une multiplication supplémentaire avec un facteur qui est basé sur la base 2 et des exposants pairs set mise en oeuvre et, dans l'emplacement qui émet les données et/ou les programmes, la signature numérique est multipliée par un facteur obtenu grâce à la multiplication Montgomery, de sorte que, au niveau de l'emplacement qui reçoit les données et/ou les programmes, le facteur de multiplication supplémentaire se trouve simplifié.

2. Procédé selon la revendication 1, **caractérisé en ce que** les données et/ou les programmes sont transférés vers un terminal de cartes à puce ou vers une carte à puce.